# EUROPÄISCHE PATENTSCHRIFT

(11) **EP 3 024 912 B1**
(45) Veröffentlichungstag und Bekanntmachung des Hinweises auf die Patenterteilung: **06.05.2020**
(21) Anmeldenummer: 14765845.4
(22) Anmeldetag: 18.07.2014
(51) Int. Cl.: C10K 1/02, C10J 3/30

(54) **VERFAHREN ZUR REINIGUNG UND GEWINNUNG VON ENERGIEHALTIGEN GASEN**
METHOD FOR PURIFYING AND OBTAINING GASES THAT CONTAIN ENERGY
PROCÉDÉ SERVANT À NETTOYER ET À EXTRAIRE DES GAZ ÉNERGÉTIQUES

(30) Priorität: 20.07.2013 DE 102013012159
(43) Veröffentlichungstag der Anmeldung: 01.06.2016
(73) Patentinhaber: LES Leyendecker Energy Solutions GmbH, 24568 Kaltenkirchen (DE)
(72) Erfinder: Leyendecker, Kurt, 54570 Deudesfeld (DE)
(74) Vertreter: Katérle, Axel
(86) Internationale Anmeldenummer: PCT/DE2014/000365
(87) Internationale Veröffentlichungsnummer: WO 2015/010677

(56) Entgegenhaltungen:
- EP-A1- 1 932 578
- DE-A1- 10 327 529
- DE-A1-102007 017 402

## Beschreibung

Die vorliegende Erfindung betrifft ein Verfahren zur Reinigung und Gewinnung von energiehaltigen Gasen, wobei ein mit einem Energieträger als Filtermaterial (Energieträger-Filtermaterial) bestückter Filterbehälter eingesetzt wird, der in seinem oberen Bereich eine Materialschleuse zur Beschickung des Filterbehälters und einen Gasaustrittstutzen und an seinem Boden eine Materialaustrittsöffnung umfasst, so dass ein schwerkraftbedingter Materialfluss von der Materialschleuse zur Materialausgangsöffnung möglich ist.

Die Erfindung betrifft ein Verfahren zur Reinigung von Gasen insbesondere, aber nicht ausschließlich von Pyrolysegasen, dadurch gekennzeichnet, dass durch das Verfahren z.B. energiehaltige Gase so gereinigt bereitgestellt werden, dass sie ohne weitere Behandlung in Gasmotoren verarbeitet werden können und weiter die zur Erzeugung von z.B. Pyrolysegas zu nutzenden energiehaltigen Stoffe zur Filterung benutzt werden, die von den energiehaltigen Stoffen aufgenommenen Schadstoffe und Stäube durch die gaserzeugenden Vorgänge aufgearbeitet und zur Energiegewinnung genutzt werden und weiter zur effizienten Filterung große Adsorptionsflächen bereitgestellt werden und weiter Verfahren und Anlagen verschiedener bekannter Verfahren zur Erzeugung von Pyrolysegas vorgeschaltet werden können, also universell nutzbar sind und das Verfahren und Anlagen für die Nutzung unterschiedlichster Rohmaterialien, z.B. Biomasse aller Art, Braunkohle, Steinkohle und Plastik oder ähnlichen Energieträgern, genutzt werden kann.

Im Rahmen der Energiewende richtet sich der Fokus neben Wind, Wasser und Solarenergie auch auf die Erzeugung von Energie aus Biomasse. Neben der technisch ausgereiften Erzeugung von Biogas über Gärungsverfahren, ist die Erzeugung von Pyrolysegas über thermische Verfahren noch mit erheblichen Problemen belastet. Insbesondere entstehen beim Vergasungsprozess unerwünschte Begleitstoffe wie Teere und Stäube, die eine anschließende energetische Umsetzung wie z.B. in einem Blockheizkraftwerk erschweren oder sogar unmöglich machen. Nach dem Stand der Technik wird die Entstehung dieser Begleitstoffe bereits im Vergasungsprozess durch verschiedene technische Verfahren minimiert. Hier sei insbesondere das Gleichstromverfahren (Imbert-Verfahren) erwähnt, bei welchem das mit Teeren belastete Pyrolysegas die heiße Oxydationszone durchströmen muss und dort in einer Redoxreaktion die Teere gecrackt werden. Erfahrungsgemäß müssen diese Reaktoren mit einem qualitativ hochwertigen Vergasungsgut bestückt werden. Um Brückenbildung als auch Verschlackung zu verhindern muss das Material grobstückig, trocken und nahezu frei von Feinanteilen sein.

Bei nahezu allen Verfahren muss das Produktgas im Rahmen vorgegebener Gasreinheits-Kriterien nachbehandelt werden. Neben technisch anspruchsvollen Verfahren wie katalytisches Cracken der Teere, Nasswäsche, thermisches Cracken durch hohe Prozesstemperaturen werden unerwünschte Begleitstoffe über mechanische Filterung entfernt. Hier sei neben der problematischen Ausfilterung (Verklebung durch Teere) über Gewebestoffe, die Heißgasfilterung über Keramik- oder Edelstahlfilter erwähnt. Diese werden über ein Druckstoß- Verfahren mit Druckluft, Pyrolysegas oder Stickstoff periodisch gereinigt. EP 1 870 444 A2 zeigt ein entsprechendes System.
Die Offenlegung DE 10 2008 036502 beschreibt umfänglich ein Verfahren zur Herstellung von Synthesegas aus Biomasse. Dabei wird als Filtermaterial Aktivkohle eingesetzt, die beim Vergasungsverfahren gewonnen wird. Dabei erfolgt die Umschichtung vornehmlich durch eine Schnecke im Vergaser. Ungeklärt bleibt, welche Wirkungen die Entnahme der Aktivkohle aus einem Temperaturbereich von 800 °C und ihr Transfer in einen Bereich von 200 °C auf die Prozess-Vorgänge haben.

Die Offenlegungsschrift DE 10 2005 000 768 A1 beschäftigt sich ebenfalls mit der Herstellung von Synthesegas, zu dessen Reinigung Aktivkohle eingesetzt wird, die in aufwendigen zusätzlichen Filteranlagen zum Einsatz kommt. Die Anlage erfordert hohen technischen Aufwand

### Nachteile des Standes der Technik:

Die DE 10 2009 014 410 behandelt eine maschinell aufwändige Gasreinigungsanlage im Nassreinigungsverfahren. Die Anlage entspricht nicht den Aufgabenstellungen dieser Erfindung. Einige der oben genannten Verfahren zur Reinigung des Pyrolysegases sind nur durch erheblichen technischen Aufwand zu realisieren. Auch bei der vielversprechenden Heißgasfilterung werden teure, und wie sich in der Praxis gezeigt hat, empfindliche Keramikfilter verwendet. Technischer Aufwand als auch die Verwendung von teuren Materialien sind aus wirtschaftlichen Gesichtspunkten nicht positiv zu bewerten. Eine mechanische Filterung über Gewebe oder ähnliches bedeuten einen erhöhten Wartungsaufwand. Des Weiteren müssen ausgetauschte Filtermaterialien teuer entsorgt werden.

Ebenfalls bedeutet die Anforderung an die Qualität des Vergasungsgutes eine wirtschaftliche Einschränkung an den Betreiber. Das Vergasungsgut muss insbesondere bei Gleichstromvergasern gesiebt und im Vorfeld getrocknet werden um einen reibungslosen Betrieb zu gewährleisten. Die oben erwähnten Verschlackungsprobleme stellen einen erheblichen Wartungsaufwand dar. Alle Lösungen die dem heutigen technischen Stand entsprechen bieten kein wirtschaftliches und somit marktreifes Verfahren.

Die DD 150 906 beschreibt ein Verfahren und eine Vorrichtung zur Festbettdruckvergasung von Kohle. Aufgabe der Erfindung ist es, ein Verfahren und eine Vorrichtung zu entwickeln, die bei gleichem spezifischen Staubaustrag eine Erhöhung der Generatorleistung bzw. bei gleicher Generatorleistung eine Verringerung des spezifischen Staubaustrages sichert. Aufgrund der hohen Strömungsgeschwindigkeit ist das Verfahren nur beschränkt geeignet, ein vollkommen staubfreies Produkt zu erhalten, das anschließend problemlos in einem beliebigen Prozess energetisch umgesetzt werden kann. Die Lehre aus DD 150 906 beschäftigt sich nicht mit einem dem Vergasungsprozess nachgeschalteten Filtrationsverfahren durch einen Energieträger sondern lediglich um die Optimierung des Vergasungsprozesses selbst. Das Produkt eines solchen Vergasungsprozesses ist Eingangsmedium bevorzugter Filtrationsvorrichtungen bzw. Filtrationsverfahren, die unter die unabhängigen Ansprüche der vorgelegten Anmeldung fallen. Auch ist für eine Filtration gemäß erfindungsgemäßer Aufgabenstellung nicht alleine Staubfreiheit von Bedeutung. Hier geht DD 150 906 möglicherweise nicht weit genug.

Die DD 26 392 beschreibt ein Verfahren zur Steigerung der Gaserzeugung von Druckvergasern, dabei wird der Staubanteil durch die Einbringung eines Benetzungsmittels abgeschieden.

Die DE 1 086 000 beschreibt ein Verfahren zur Abfilterung feiner Brennstoffanteile aus dem Gasstrom von Gaserzeugern, wobei der Brennstoff oberhalb der Vergaserzone mit einem in dem in der entsprechenden Schicht der Beschickungssäule nicht siedenden Kohlenwasserstoff benetzt wird.

Weiterer Stand der Technik zur Erzeugung oder/und Reinigung von Pyrolysegas oder anderen, aus einem Vergasungs- oder/und Verbrennungsprozess stammenden Gasen findet sich in der DE 103 27 529 A1, der EP 1 932 578 A1 und der DE 10 2007 017 402 A1.

Vor dem Hintergrund des oben zitierten Standes der Technik ist es die Aufgabe der Erfindung, ein Verfahren vorzustellen, welches:
- das Vergasungsgut als Filtermaterial einsetzt;
- als Vergasungs-/Filtermaterial (Energieträger-Filtermaterial) z.B. aber nicht ausschließlich Chinagras, Stroh, Holzschnitzel aller Art, Holzpellets, Klärschlamm-Granulat Plastik oder ähnliches Material einsetzt, welches eine Adsorptionsfähigkeit besitzt;
- kompakt und einfach im Aufbau ist;
- einen vollautomatischen Betrieb mit hoher Betriebssicherheit bei geringem Wartungsaufwand bietet;
- ein hochwertiges Filterergebnis entsprechend geforderter Gasreinheitskriterien zur Verfügung stellt;
- keine hohen Ansprüche an das zu verwendende Vergasungsmaterial stellt;
- einen hohen Wirkungsgrad bietet durch optimale thermische Ausnutzung des heißen Gasstromes;
- Absorption, Filterung, Trocknung, Bereitstellung des Vergasungsguts als auch Kühlung des Gases in einer Einheit bietet;
- keine Anfahrverluste durch Abfackeln" aufweist;
- zur Koppelung mit diversen Vergasungs- als auch Verbrennungsverfahren (z.B. Müllverbrennung) geeignet ist;
- geeignet ist, auch andere Filteraufgaben zu lösen (z.B. Filterung von Industriestäuben, Umluft-Filterung oder ähnliches); herausgefilterte Verunreinigungen im gekoppelten Vergasungs-/Verbrennungsprozess umweltgerecht entsorgt; und
- eine große Anpassungsfähigkeit an schwankende Gasanforderungen besitzt.

Gelöst werden die Aufgaben durch ein Verfahren zur Reinigung von energiehaltigen Gasen gemäß dem selbständigen Anspruch 1. Bevorzugte Weiterbildungen des Verfahrens sind in den abhängigen Ansprüchen angegeben. Eine zur Durchführung des Verfahrens geeignete Vorrichtung umfasst einen mit einem Energieträger als Filtermaterial bestückten Filterbehälter, wobei der Filterbehälter in seinem oberen Bereich eine Materialschleuse zur Beschickung des Filterbehälters sowie einen Gasaustrittstutzen und an seinem Boden eine Materialaustrittsöffnung umfasst, so dass ein schwerkraftbedingter Materialfluss von der Materialschleuse zur Materialausgangsöffnung möglich ist. Darüber hinaus umfasst die Vorrichtung eine über die Materialausgangsöffnung mit dem Filterbehälter in Wirkverbindung stehende Vergasungs- und/oder

Verbrennungseinrichtung sowie ein Rührwerk zur Homogenisierung des Energieträger-Filtermaterials.

Das erfindungsgemäße Konzept sieht vor, dass der Filterbehälter als separater Behälter in Kombination mit der Vergasungs- und/oder Verbrennungseinrichtung ist und dabei zumindest in seinem unteren und mittleren Bereich wärmeisoliert ist.

Alle Ausführungsvarianten folgen der gemeinsamen Idee, dass für eine ausreichende Verweilzeit der Gaserzeugergase in einem eher porös geschütteten Filtermaterial mit ausreichender Kontaktfläche gesorgt werden muss. Erstaunlicherweise kommt es bei entsprechenden Drosselungen und insbesondere eher feuchten Filterschüttungen zu beeindruckenden Brennergebnissen, die an einer sauberen blauen Flamme beim Verbrennen des erfindungsgemäß gefilterten Gases zu erkennen waren.

Das Verhältnis von Länge und Durchmesser des Filterbehälters ist bevorzugt so dimensioniert, dass die Durchtrittsgeschwindigkeit des energiehaltigen Gases kleiner als 50 m/h beträgt. In einer bevorzugten Ausführungsform hat der Filtrationsbehälter einen runden Querschnitt mit einem 1,5 m großen Durchmesser. Dabei wurden Volumenströme um 40 m³/h als vorteilhaft ermittelt.

Zwischen der Materialschleuse und dem Gasaustrittsstutzen ist ein Trennblech angeordnet, das die Funktion hat, die Materialeintragszone von der Gasaustrittszone zu trennen, so dass beim Materialeintrag möglicherweise auftretender Staub nicht das gereinigte Gas verunreinigt.

Bei einer Ausgestaltung des Filterbehälters ist in seinem unteren Bereich ein Gaseintrittsstutzen angeordnet, über den im Falle einer Kombination mit einem Gleichstromvergaser das durch die Vergasung des Energieträger-Filtermaterials gewonnene energiehaltige Gas zur Reinigung in den Filterbehälter eingeführt wird.

Der Filterbehälter ist über die Materialaustrittsöffnung direkt mit einem Gegenstromvergaser kombiniert. In diesem Fall erfolgt die Rückführung des gewonnenen Gases direkt über die Materialaustrittsöffnung, so dass kein separater Gaseintrittsstutzen erforderlich ist. Jedoch kann der Filterbehälter auch bei der Kombination mit einem Gegenstromvergaser mit einer zusätzlichen Verbrennungsanlage kombiniert werden, was dann einen zusätzlichen Gaseintrittsstutzen, vorzugsweise im Bereich des Vergasers erfordert.

Bei einer vorteilhaften Ausgestaltung der vorliegenden Erfindung umfasst die Vorrichtung einen Füllstandsensor, der im oberen Bereich des Filterbehälters in der Nähe der Materialschleuse angeordnet ist, und über den mit Hilfe einer Steuereinheit der Füllstand des Behälters und ein kontinuierlicher Betrieb reguliert werden.

Als Energieträger-Filtermaterial können beliebige Energieträger in Betracht gezogen werden, beispielsweise ausgewählt aus der Gruppe bestehend aus Biomasse aller Art, Braunkohle, Steinkohle, Plastik, Altholz, Holzschnitzel, Holzpellets, Klärschlammgranulat, Chinagras, Stroh, Papier, Reifen und Müll.

Für den Betrieb mit feuchtem Energieträger-Filtermaterial umfasst der Filterbehälter in seinem mittleren Abschnitt eine Querstromentfeuchtungsvorrichtung, wobei diese Einrichtung zusätzlich einen Trockengaseintrittsstutzen, ein Kondensatablassventil und einen Kondensator umfasst. Die Erfindung umfasst außerdem eine Ausführungsform mit in dem Entfeuchter nach dem Kondensator zur Energierückführung in den Vergaser angeordneten Wärmetauscher. Hiermit konnte der Wirkungsgrad weiter verbessert werden.

In einer vorteilhaften Ausführungsform der Vorrichtung ist der der Filterbehälter als vertikal angeordneter Zylinder mit einem Verhältnis von Höhe zu Durchmesser zwischen 20:1 und 0,5:1 ausgestaltet und seine Beladungsdichte mit Energieträger-Filtermaterial liegt zwischen 20 und 95 Vol.%, besonders bevorzugt zwischen 30 % und 70 %. Eine besonders bevorzugte Beladungsdichte wurde bei Experimenten mit einem Filtrationsmaterial erreicht, das auf 50 % Feststoff im Gasvolumen ausgelitert werden konnte. Im Betrieb beträgt die Ausgangstemperatur des mit der Vergasungs- und/oder Verbrennungseinrichtung gewonnenen Gases am Übergang zwischen Vergasungs- und/oder Verbrennungseinrichtung und Filterbehälter zwischen 150 °C und 200 °C beträgt.

Die Erfindung zeigt jedoch weiteren Forschungsbedarf auf. Insbesondere ist es ausgehend von den bisherigen Versuchen zu erwarten, dass weitere Optima außerhalb der oben angegebenen Parameterbereiche gefunden werden können.

Gegenstand der vorliegenden Erfindung ist das Verfahren zur Reinigung von energiehaltigen Gasen gemäß Anspruch 1, wobei das energiehaltige Gas durch einen mit einem Energieträger-Filtermaterial bestückten Filterbehälter geleitet wird. Der Filterbehälter umfasst in seinem oberen Bereich eine Materialschleuse, über die der Filterbehälter mit dem Energieträger-Filtermaterial beschickt wird, sowie einen Gasaustrittstutzen, über den das gereinigte Gas abgeleitet wird. An seinem Boden umfasst der Filterbehälter eine Materialaustrittsöffnung, so dass ein schwerkraftbedingter Materialfluss von der Materialschleuse zur Materialausgangsöffnung stattfindet, wobei das Energieträger-Filtermaterial über die Materialausgangsöffnung einer mit dem Filterbehälter in Wirkverbindung stehenden Vergasungs- und/oder Verbrennungseinrichtung zugeführt wird. Während des Verfahrens wird vorzugsweise ein Rührwerk zur Homogenisierung des Energieträger-Filtermaterials eingesetzt.

Nachfolgend wird die Erfindung anhand von Abbildungen ausführlich dargestellt. Alternative Lösungen sind denkbar und Gegenstand dieser Erfindung, sofern sie der Aufgabenstellung entsprechen.
Fig. 1 zeigt eine nicht erfindungsgemäße Filtereinrichtung mit ihren wesentlichen Bestandteilen,
Fig. 2 zeigt eine nicht erfindungsgemäße Filtereinrichtung zusammen mit einer separat angeordneten Gleichstrom-Vergaseranlage,
Fig. 3 zeigt die erfindungsgemäße Filtereinrichtung, gekoppelt mit einem Gegenstromvergaser,
Fig. 4 zeigt die Kopplung der Filteranlage mit einer Müllverbrennungsanlage,
Fig. 5 zeigt die Alternativlösung einer Kombination von 3 Filtereinrichtungen mit angebauten Gegenstrom-Vergasern des Typs gem. Fig. 3, und
Fig.6 zeigt die Filtereinrichtung aus Fig.1 mit einer Querstromentfeuchtungsvorrichtung.

Das Verfahren beruht auf der Grundüberlegung, dass Gase, insbesondere teer- und staubbelastete Pyrolysegase aus einem Biomasse-Vergaser, durch eine großvolumige Schüttung eines später zu vergasenden oder zu verbrennenden Biomasse-Gutes durch geleitet werden.

Dieses Schüttgut soll im Folgenden als Vergasungs-/Filtergut (Energieträger-Filtermaterial) bezeichnet werden.
Das Vergasungs-/Filtergut dient als Adsorptionsmaterial. Durch das große Volumen des Vergasungs-/Filterguts wird dem kontaminierten Gas eine große Reaktionsfläche gegenübergestellt an dem unerwünschte Begleitstoffe wie Teere auskondensieren können. An diesem auskondensierten Teer bleiben in Folge Stäube hängen. Auch Feuchtigkeit kondensiert zum großen Teil an dieser Fläche ab, was wiederum zu einer Optimierung des Filtereffekts führt. Da die Gasgeschwindigkeit am oberen Füllungsniveau verschwindend gering ist, als auch feuchtes Filtermaterial vorliegt, liegen keine Voraussetzungen für das Mitreißen von Stäuben vor.

Das Ergebnis ist ein hochwertiges, von unerwünschten Begleitstoffen befreites Pyrolysegas, welches direkt einer weiteren Verwendung zugeführt werden kann.
Als Vergasungs-/Filtergut können viele Energieträger in Betracht gezogen werden, die im gekoppelten Vergasungs-Nerbrennungsprozess vergast/verbrannt werden können. Eine Verwendung von Holzhackschnitzeln hat in Versuchen mit einer erfindungsgemäßen Vorrichtung zu guten Ergebnissen geführt. Die Verwendung von z.B. Chinagras, Stroh, Holzpellets, Klärschlammgranulat, Holzkohle oder ähnlichen Biomasse-Energieträgern ist möglich. Neben der Verwendung von erneuerbaren Energieträgern könnte auch Braun- oder Steinkohle, Torf, Plastik oder ähnliches verwendet werden.
All diese Energieträger können in ihrer Stückigkeit variieren. Für eine gute Filterleistung ist eine Feinstückigkeit oder eine Mischung von Grob- und Feinanteilen anzustreben, da sich hierdurch die effektive Filter- oder Adsorptionsfläche vergrößert.

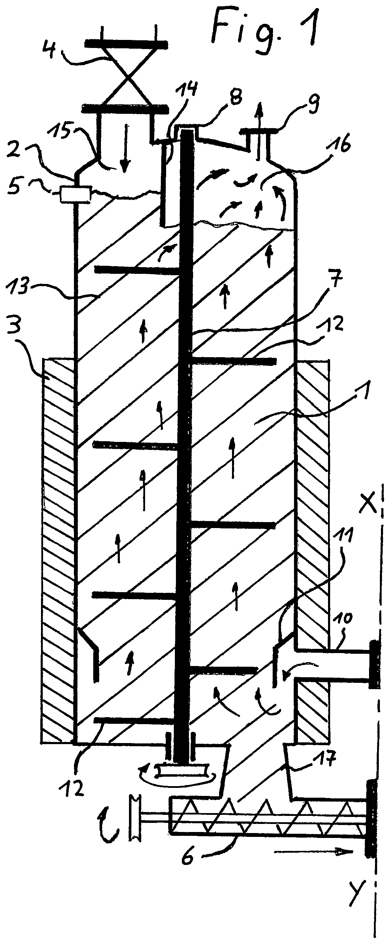

***Figur 1*** zeigt eine Vorrichtung 1 zur Durchführung eines nicht erfindungsgemäßen Verfahrens. Ein großvolumiger gasdichter Behälter 2 dient der Aufnahme und Bevorratung des Vergasungs-/Filterguts 13. Vorteilhaft ist dieser Behälter in zylindrischer Form ausgeführt. Abgewandelte Ausführungsformen wie z.B. im Querschnitt viereckig, länglich, breit, bauchig oder auch nach unten öffnend konusförmig (begünstigt den Materialfluss) können ebenfalls Verwendung finden.
Im oberen Bereich des Behälters 2 befinden sich die gasdicht arbeitende Materialschleuse 4 und der Gasaustrittsstutzen 9. Zwischen beiden ist ein Trennblech 14 angebracht. Das Blech trennt die Eintragszone 15 von der Gasaustrittszone 16. Es sorgt dafür, dass die Staubentwicklung beim Eintrag des Materials von der Gasaustrittszone 16 sicher ferngehalten wird und damit der beim Eintrag auftretende Staub sich nicht mit dem gereinigten Gas vermischen kann.
Ein Füllstandsensor 5 sorgt über eine hier nicht aufgeführte Steuereinheit für einen kontinuierlichen Betriebsfüllstand in Höhe des Sensors. Somit wird eine optimale Filterleistung gewährleistet.
Am unteren Boden des Behälters ist eine Gaseintrittsstutzen 10 angeordnet und der Materialaustritt 17. Ein Rührwerk 7 in Form einer sich drehenden Welle mit angeflanschten Rührarmen 12 sorgt dafür, dass sich keine unerwünschten Kammern oder Kanäle im Material bilden, welche das Filterergebnis negativ beeinflussen können. Am oberen und unteren Ende befinden sich die Rührwerkslager 8. Diese sind ebenfalls gasdicht ausgeführt. Das Rührwerk 7 ist an seinem unteren Ende, angepasst an die Form des Behälterbodens, mit Kratzarmen 12 ausgestattet, die ein Stocken des Materialflusses verhindern. Weiter führen die Kratzarme 12 dem Materialaustritt 17 lockeres, förderfähiges Material zu. In Fig. 1 ist eine Schnecke 6 für den Abtransport des kontaminierten Materials zur Vergasung vorgesehen. Die Nutzung anderer Fördermethoden ist denkbar.
In einer weiteren nicht dargestellten Ausführung wird auf das Rührwerk verzichtet indem der Behälter so groß dimensioniert wird, das ein Materialfluss in jedem Fall gewährleistet ist. In einer ebenfalls nicht dargestellten Ausführung ist der Behälter in einer nach unten sich öffnenden konusförmigen Ausführung gestaltbar.
Oberhalb des Gaseintrittsstutzens 10 ist im Innern des Behälters 2 über den ganzen Umfang des Behälters ein Gasleitblech 11 angebracht. Es bildet einen Ringkanal über den der Gasstrom gleichmäßig über den nach unten gebildeten Spalt in das Vergasungs-/Filtergut verteilt wird. Diese Anordnung sorgt in Verbindung mit dem darunter kreisenden Kratzarm 12 dafür, dass das Material kontinuierlich durchmischt wird und sich keine Verstopfungen durch die im Gas enthaltenen Verunreinigungen entwickeln können. Zur Verbesserung des Vergasungswirkungsgrades ist der Behälter 2 mit einer Wärmeisolierung 3 ausgestattet. Die Trennlinie X-Y grenzt den Übergangsbereich zur Ankopplung der Filteranlage an verschiedene Vergasungs-/ Verbrennungseinrichtungen ab.

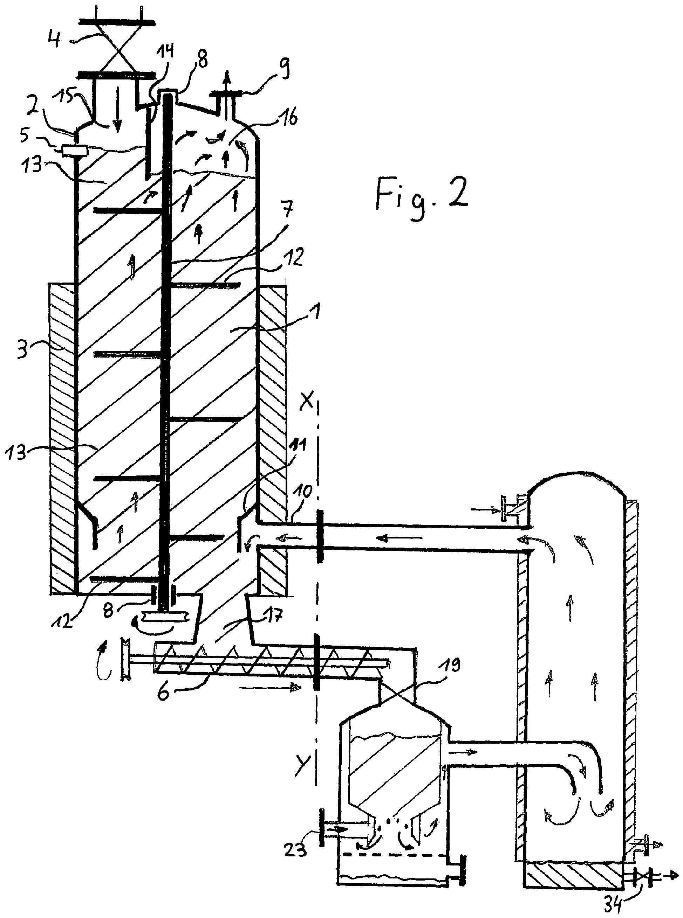

**Fig. 2** zeigt eine nicht erfindungsgemäße Filtereinrichtung 1 mit einer separat angeordneten Gleichstromvergaser-Anlage. Die Filtereinrichtung, dargestellt in Fig. 1 und zugehörig oben beschrieben, besitzt im unteren Teil die Austragsvorrichtung 6 - hier dargestellt durch eine Schnecke, über die das kontaminierte Filtergut über die gasdichte Materialschleuse 19 dem Reaktionsraum der Vergaseranlage zugeführt wird.

Das im Gleichstromvergaser erzeugte, noch ungereinigte Gas, tritt mit hoher Temperatur aus der Vergaseranlage aus. Um zu verhindern, dass wegen der hohen Temperatur sich der Pyrolysevorgang im erfindungsgemäßen Filterbereich fortsetzt, wird das erzeugte Gas über einen Kondensator 26 geleitet und entsprechend gekühlt. Im Kondensator bildet sich aus dem dampfförmigen Feuchtigkeitsgehalt des Rohgases Kondensat, das auch Teer und andere Verunreinigungen enthalten kann. Es wird über den KondensatAuslass 28 abgeführt und weiterer Reinigung zugeführt. Dabei können die abgeschiedenen Teeranteile dem Vergasungsprozess erneut zugeführt werden. Die Filtereinrichtung 1 kann auch zur Reinigung belasteter Abgase von z.B. Hackschnitzel-Heizanlagen oder Müllverbrennungsanlagen eingesetzt werden. Notwendig ist, dass diese Abgase, ebenfalls gekühlt, dem erfindungsgemäßen Filtersystem zugeführt werden. Die Schadstoffe werden hier durch die Adsorptionsfähigkeit des Filter-/Verbrennungsmaterials gebunden und folgend dem Verbrennungsprozess in der gekoppelten Verbrennungsanlage wieder zugeführt.

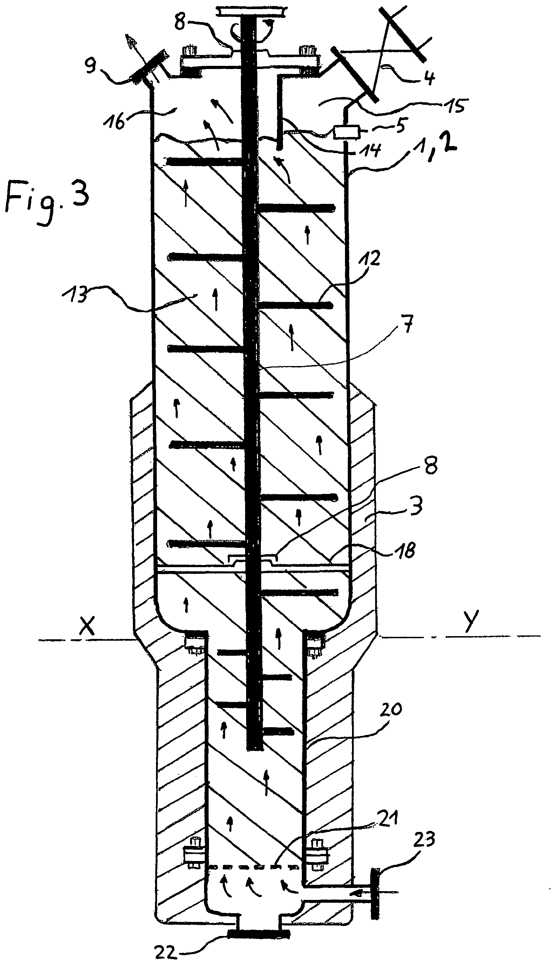

In **Figur 3** wird das Verfahren erfindungsgemäß in Verbindung mit einem GegenstromVergaser mit dem Vergaserbehälter 20 dargestellt. Diese Anordnung ist insofern besonders vorteilhaft, da die Vergaser-Anlage direkt mit der erfindungsgemäßen Filteranlage verbunden ist und das kontaminierte Filtergut als Vergasungsmaterial durch Schwerkraft und unterstützt durch ein nach unten verlängertes Rührwerk 7 dem Pyrolysevorgang direkt zugeführt wird. Die untere Aufnahme 8 der Rührerwelle erfolgt in einem Bereich oberhalb der Materialaustrittsöffnung bzw. der sogenannten Trennlinie (in Figur 3 kein zugehöriges Bezugszeichen 17 vermerkt) im Gegensatz zu Figur 1 mit einer gesonderten Lagerhalterung 18, welche strebenförmig ausgeführt ist, um den Materialfluss in diesem Bereich zu gewährleisten. Der Gegenstromvergaser 20 ist ebenfalls gegen Wärmeverluste isoliert 3. Am unteren Ende sind ein Vergasungsmitteleinlassstutzen 23 sowie ein Ascheaustrittstutzen 22 angebracht. Soll die Asche- Entnahme automatisch erfolgen, so ist der Raum unter dem Rost 21 sinnvoll groß auszubilden. Ein Sensor löst dann bei vollem Behälter über ein hier nicht dargestelltes gasdichtes Ausschleusungssystem seine Entleerung aus. Die Trennlinie X-Y grenzt den Übergangsbereich zwischen Filtersystem und Vergaser ab.

Beispielhaft können anhand der Figur 3 auch die Dimensionen und die Temperaturverläufe der Anlage aufgezeigt werden. In dieser in der Praxis eingesetzten Versuchsanlage besitzt der Filterbehälter 2 eine Höhe von 7 m und einen Durchmesser von 1.25 m. Der mit dem Filterbehälter kombinierte Gegenstromvergaser weist einen Durchmesser von 0.7 m und eine Höhe von 1.5m auf. Gegenstromvergaser lässt sich in vier etwa gleich große Teilabschnitte unterteilen, wobei im untersten Teilabschnitt bei Temperaturen zwischen 950 und 1200 °C Das Energieträger-Filtermaterial 13 in einer Oxidationszone vergast wird. Dann durchströmt das Gas eine Reduktionszone bei Temperaturen zwischen 600 und 900 °C und gelangt bei Temperaturen zwischen 200 und 600 °C in die Pyrolysezone. Die letzte Zone vor Erreichen des Filterbehälters hat eine Temperatur von ca. 200 °C. Hier findet bereits eine Trocknung des Gases statt. Die erste Kondensation von Teeren erfolgt bei ca. 350 °C. An der Materialaustrittsöffnung, die den Übergang zwischen Gegenstromvergaser und Filterbehälter 2 bildet, beträgt die Temperatur zwischen 120 und 200 °C. Der untere Bereich des Filterbehälters 2 ist bis zu einer Höhe von ca. 2m der Hauptbereich für die Trocknung des Gases und die Abscheidung von Teer und Pyrolyseöl, wobei die Temperatur unter 100 °C liegt. Der darüber liegende Bereich dient der Adsorption von Teeren, Wasser, Stäuben und sonstigen Stoffen. Am Gasaustrittsstutzen 9 besitzt das gereinigte und direkt einsetzbare Gas eine Temperatur von ca. 40 bis 90 °C. Zu diesem Beispiel ist anzumerken, dass die Höhe des Filterbehälters bewusst hoch gewählt wurde, um eine sichere Reinigung des Gases zu gewährleisten. In der Praxis hat sich herausgestellt, dass eine vollständige Reinigung der Gase auch bei wesentlich geringeren Höhen des Filterbehälters 2 möglich ist. Im vorliegenden Fall wurden als Energieträger-Filtermaterial 13 Holzhackschnitzel G 30 w 20 nach der OE Norm M 7133 mit einem Brennwert von 4 kWh/kg eingesetzt. Mit diesem Brennstoff konnte auf Anhieb ein elektrischer Bruttowirkungsgrad von 21.6 % erreicht werden. Es ist davon auszugehen, dass bei Optimierung der Anlage (Isolierung) ein elektrischer Bruttowirkungsgrad von 30 % realisierbar ist.

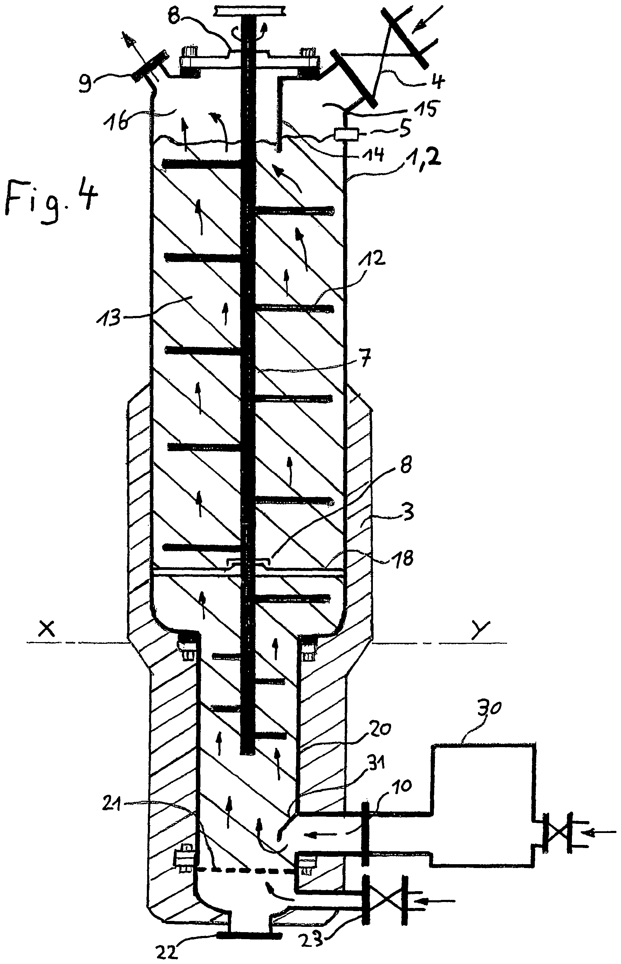

**Fig. 4** zeigt die Kopplung der Filteranlage mit einer Müllverbrennungsanlage. Besonders geeignet erscheint in diesem Fall der Einsatz der Vergaser - Filter-Kombination gemäß Fig. 3 . In diesem Falle wird das zu reinigende Rauchgas aus der Müllverbrennungsanlage 30 über den Vergasereinlass 10 in den Vergaser - Behälter 20 geleitet. Das heiße Rauchgas wird in Höhe der Redoxzone eingeführt. Hier werden die belasteten Abgase erneut hohen Temperaturen ausgesetzt, welches zur weiteren Zersetzung als auch thermochemischer Umsetzung der Schadstoffe führt. Weiter wird der folgende Pyrolyseprozess unterstützt durch Einbringung von zusätzlicher thermischer Energie und verbessert folglich den Vergasungswirkungsgrad. Über den Vergasungsmitteleinlassstutzen 23 wird Vergasungsmittel in Form von Luft, Sauerstoff, Wasserdampf oder CO₂ gesteuert zugeführt um eine optimale Temperatur im Redoxbereich einzustellen.

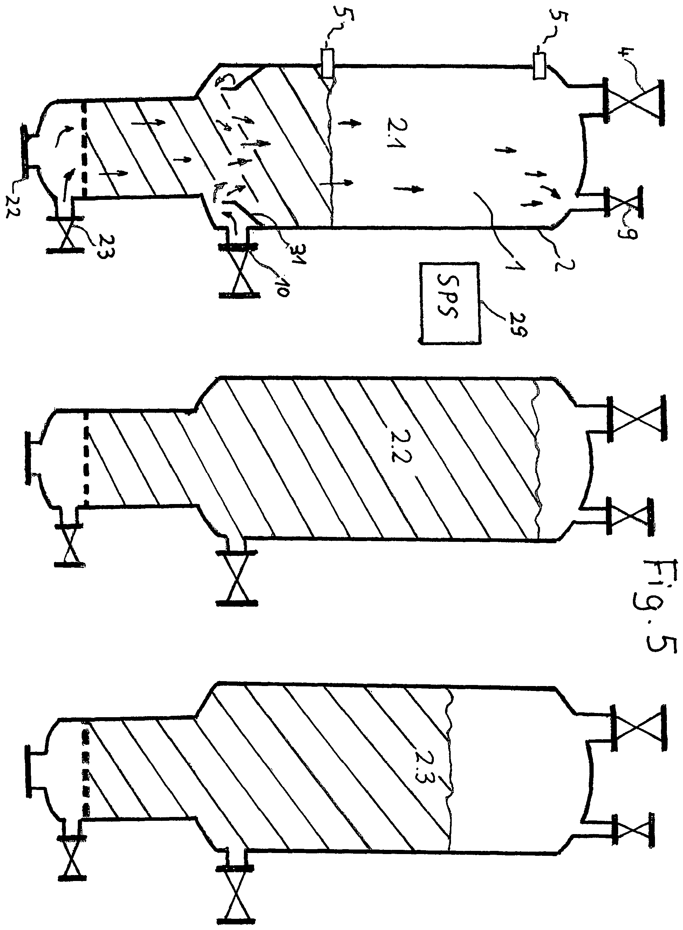

**Fig. 5** zeigt eine alternative Gestaltung des Filterverfahrens, dadurch gekennzeichnet, dass z.B. drei oder mehr Behälter 2 nebeneinander angeordnet werden. Eingesetzt werden Behälter 2 nun mit (2.1), (2.2) bzw. (2,3) bezeichnet, fest verbunden mit Gegenstromvergasungsbehältern 20. Es handelt sich um die Filtervergasungsvorrichtung, die in Fig. 3 dargestellt und erläutert ist.
Diese werden im Folgenden als Einheit benannt. Besonderes Kennzeichen dieser alternativen Gestaltung ist, dass diese Einheiten abwechselnd unterschiedliche Funktionen übernehmen. Einheit 2.1 übernimmt im Beispielsfall den Vergasungsbetrieb. Das produzierte Pyrolysegas wird in die Einheit 2.2 eingeleitet, welche im gefüllten Zustand nun die Filterfunktion übernimmt. Zur gleichen Zeit wird Einheit 2.3 mit frischem Vergasungs-/Filtergut befällt.
Wird in Einheit 2.1 ein minimaler Füllstand erreicht, ändern die Einheiten ihre
Funktionen: Einheit 2.2 übernimmt die Vergaserfunktion
Einheit 2.3 übernimmt die Filterfunktion und
Einheit 2.1 wird frisch befüllt.
Stellt sich in Einheit 2.2 minimaler Füllstand ein, wechselt die Vergaser-Funktion in Einheit 2.3, Einheit 2.1 übernimmt die Filterfunktion, Einheit 2.2 wird frisch befällt. Stellt sich in Einheit 2.3 minimaler Füllstand ein, übernimmt Einheit 2.1 wieder die Vergasungsfunktion, Einheit 2.2 übernimmt die Filterfunktion usw.

Beim Umschalten der Funktion einer Einheit vom Vergasungsbetrieb auf Befüllen enthält die Einheit noch Pyrolysegas, das nicht verloren gehen sollte. Zweckmäßig ist, Abgas des zu versorgenden Block-Kraftwerkes zur Spülung zu benutzen. Es wird über den Gaseintrittsstutzen 10 eingeblasen und verdrängt das noch vorhandene Pyrolysegas. Dieses wird über den Gasaustrittsstutzen 9 dem Behälter mit Vergaserfunktion über dessen Gaseintrittsstutzen 10 zugeführt. Ist die Einheit nach Spülung frisch befällt, übernimmt diese nun über die Einleitung des zuvor auf max. 200 Grad Celsius gekühlten Abgasstroms eine Vortrocknungsfunktion. Das Abgas gibt seine noch vorhandene thermisch Energie zum Teil an das Vergasungs-/filtergut ab und wird zeitgleich gefiltert. Eine hier nicht dargestellte Ausführungsform sorgt über eine über die Behälterhöhe gestaffelte Ableitung des Abgases dafür, dass der feuchte Abgasstrom zum größten Teil außerhalb des Behälters auskondensiert. Ein Leitblech 31, welches über den Behälterumfang gasdicht angebracht ist, bildet einen Ringkanal, der für eine gleichmäßige Verteilung des eingeleiteten Abgases in das Vergasungs-/filtergut sorgt. Dies sei erwähnt als abweichendes Merkmal zur Ausführung in Figur 3.

Mit dem Abschalten der Vergaserfunktion wird der Vergasungsmitteleinlassstutzen 23 geschlossen. Die Positionierung des Gaseintrittsstutzens 10 oberhalb des Vergaserbehälters 20 bewirkt, dass im Vergaserbehälter 20 mangels Zufuhr von Vergasungsmittel.keine Reaktionen erfolgen. Die Temperatur der noch heißen Kohle dieses Bereiches klingt langsam ab.
Alle Betriebsabläufe, insbesondere auch die Wechsel der Funktion der einzelnen Einheiten werden durch eine Steuerungseinrichtung 29 gemäß o.g. Funktionsbeschreibung betätigt. Die Füllstandsensoren 5 liefern die notwendigen Eingangssignale.
Die Einheiten sind über Rohre und zugehörige Steuerventile verbunden. Aus Übersichtsgründen wird auf diese Darstellung verzichtet.
Die Anordnung von zwei oder mehr Einheiten hat den Vorteil, dass bei verringerter Bauhöhe der Anlage eine hinreichende Filterleistung gewährleistet wird. Weiterhin bietet diese Anordnung die Möglichkeit der Vortrocknung über Abgas bei gleichzeitiger Filterung des Abgases. Ebenfalls kann auf eine Doppelschleuse verzichtet werden zu Gunsten einer einfachen Materialschleuse 4.

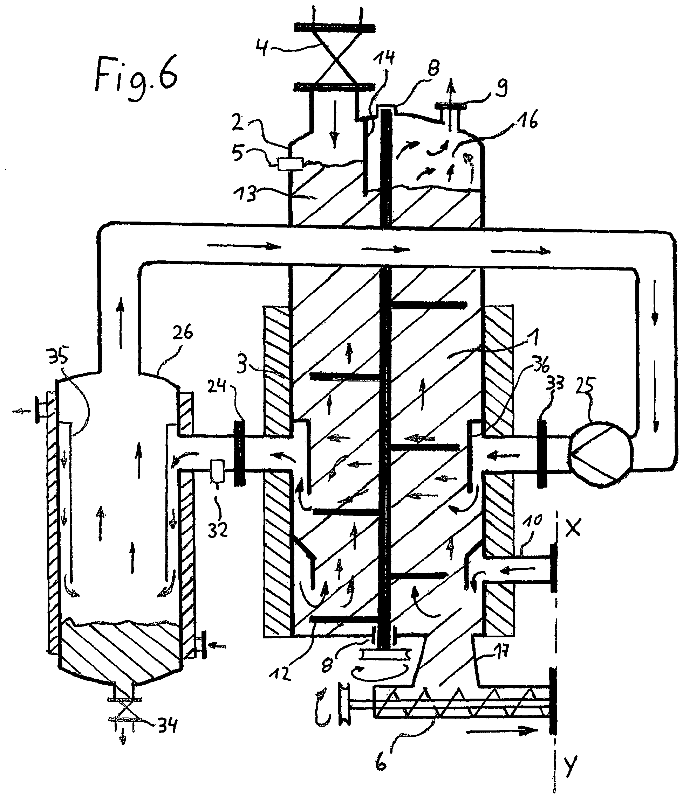

**Fig.6** zeigt die Filtereinrichtung aus Fig.1 mit einer Querstromentfeuchtungsvorrichtung. Eine vorteilhafte Kombination der Filtervorrichtung mit einer folgend beschriebenen Querstromentfeuchtungsvorrichtung im geschlossenen Prozess ermöglicht den Betrieb mit feuchtem Vergasungs-/filtermaterial. Auf eine aufwendige Vortrocknung des Materials außerhalb der Vorrichtung kann somit verzichtet werden. Die Querstromentfeuchtung kann auch in den Filterversionen angewendet werden. Fig. 1 dient nur als Beispiel.
In der Pyrolyse- und Trocknungsphase wird durch thermische Energiezufuhr im Vergasungsgut enthaltenes Wasser ausgetrieben. Als Wasserdampf durchströmt es die Filtervorrichtung von unten nach oben. Ein Gebläse (25) drückt das mit Wasserdampf belastete Prozessgas über den Trockengaseintrittsstutzen (33) quer zur eigentlichen Strömungsrichtung des Gases im Behälter. Der Wasserdampf wird im Querstrom mitgerissen und über den Absaugstutzen (24) dem Kondensator (26) zugeführt. Ein Gasleitblech welches im Kondensator über den gesamten Umfang angebracht ist, sorgt für eine großflächige Verteilung des feuchten Gases an dem gekühlten Kondensatoraußenmantel. Der Wasserdampf als auch mitgeführte Teeranteile kondensieren hier aus und sammeln sich im unteren Teil des Behälters, der über ein Kondensatablassventil (34) entleert werden kann. Das angefallene Kondensat muss entsorgt oder entsprechend aufbereitet werden. Teer und Pyrolyseöl können wieder dem Vergasungsprozess zugeführt werden. Der Kondensator kann auch in anderen Variationen ausgeführt werden. Das im Kondensator getrocknete Prozessgas wird über eine Rohrverbindung im geschlossenen Prozess wieder zum Gebläse (25) geleitet. Im Bereich des Querstromes sind Lochbleche (36) und/oder Leitbleche vor dem Gaseintritt als auch Gasaustritt über etwa ein Viertel des Behälterumfangs angebracht. Diese sind jeweils nach unten offen ausgeführt. Dadurch wird verhindert dass Vergasungs-/Filtermaterial im Querstrom mitgerissen wird. Durch die Öffnung nach unten wird einer Verstopfung durch Teeranteile vorgebeugt, dadurch dass immer frisches Vergasungsgut an der Öffnung abwärts vorbeirutscht. Ein Feuchtigkeitssensor (32) der am Gasaustritt (24) angebracht ist, misst die vorhandene Feuchtigkeit und regelt über die Steuervorrichtung (29) die Leistung des Gebläses.

**Bezugszeichenliste**

| | | | |
|---|---|---|---|
| 1 | Filteranlage | 34 | Kondensatablassventil |
| 2 | Filterbehälter | 35 | Gasleitblech |
| 3 | Isolierung | 36 | Lochblech |
| 4 | Materialschleuse | | |
| 5 | Füllstands-Sensor | | |
| 6 | Austragsvorrichtung | | |
| 7 | Rührwerk | | |
| 8 | Rührwerkslager | | |
| 9 | Gasaustrittsstutzen | | |
| 10 | Gaseintrittsstutzen | | |
| 11 | Gasleitblech | | |
| 12 | Rühr-/Kratzarm | | |
| 13 | Energieträger- Filtermaterial | | |
| 14 | Trennblech | | |
| 15 | Eintragszone | | |
| 16 | Gasaustrittszone | | |
| 17 | Materialaustrittsöffnung | | |
| 18 | Lagerhalterung | | |
| 19 | gasdichte Materialschleuse | | |
| 20 | Vergaserbehälter | | |
| 21 | Rost | | |
| 22 | Ascheaustrittsstutzen | | |
| 23 | Vergasungsmitteleinlassstutzen | | |
| 24 | Absaugstutzen | | |
| 25 | Gebläse | | |
| 26 | Kondensator | | |
| 27 | Rauchgaseintritt | | |
| 28 | Kondensatauslass | | |
| 29 | Steuerungseinrichtung | | |
| 30 | Verbrennungsanlage | | |
| 31 | Leitblech | | |
| 32 | Feuchtigkeitssensor | | |
| 33 | Trockengaseintrittsstutzen | | |

## Patentansprüche

1. Verfahren zur Reinigung und Gewinnung von energiehaltigen Gasen, wobei das energiehaltige Gas durch einen mit einem Energieträger-Filtermaterial (13) bestückten Filterbehälter (2) geleitet wird, wobei der Filterbehälter (2) in seinem oberen Bereich eine Materialschleuse (4), über die der Filterbehälter (2) mit dem Energieträger-Filtermaterial (13) beschickt wird, und einen Gasaustrittsstutzen (9), über den das gereinigte Gas abgeleitet wird, sowie an seinem Boden eine Materialaustrittsöffnung (17) umfasst, so dass ein schwerkraftbedingter Materialfluss von der Materialschleuse (4) zur Materialausgangsöffnung (17) stattfindet, wobei das Energieträger-Filtermaterial (13) über die Materialausgangsöffnung (17) einem mit dem Filterbehälter (2) in Wirkverbindung stehenden Gegenstromvergaser zugeführt wird, wobei der Filterbehälter (2) über die Materialaustrittsöffnung (17) direkt mit dem Gegenstromvergaser kombiniert ist,
wobei während des Verfahrens ein Rührwerk (7) zur Homogenisierung des Energieträger- Filtermaterials (13) eingesetzt wird,
**dadurch gekennzeichnet, dass** das Energieträger-Filtermaterial als Adsorptionsmaterial dient, an welchem Teere sowie Feuchtigkeit kondensieren.

2. Verfahren nach Anspruch 1,
**dadurch gekennzeichnet, dass**
als Energieträger-Filtermaterial (13) ein Material ausgewählt aus der Gruppe bestehend aus Biomasse aller Art, Braunkohle, Steinkohle, Plastik, Altholz, Holzschnitzel, Holzpellets, Klärschlammgranulat, Chinagras, Stroh, Papier, Reifen und Müll eingesetzt wird.

3. Verfahren nach einem der Ansprüche 1 bis 2,
**dadurch gekennzeichnet, dass** zwischen der Materialschleuse (4) und dem Gasaustrittsstutzen (9) ein Trennblech (14) angeordnet ist.

4. Verfahren nach einem der Ansprüche 1 bis 3,
**dadurch gekennzeichnet, dass** der Filterbehälter (2) in seinem mittleren Abschnitt eine Querstromentfeuchtungsvorrichtung umfasst, wobei die Querstromentfeuchtungsvorrichtung einen Trockengaseintrittsstutzen (33), ein Kondensatablassventil (34) und einen Kondensator (26) umfasst, und wobei insbesondere ein Wärmetauscher dem Kondensator zur Energierückführung in den Vergaser nachgeordnet angeordnet ist.

5. Verfahren nach einem der Ansprüche 1 bis 4,
**dadurch gekennzeichnet, dass** der Filterbehälter (2) ein vertikal angeordneter Zylinder mit einem Verhältnis von Höhe zu Durchmesserzwischen 20:1 und 0,5:1.

6. Verfahren nach einem der Ansprüche 1 bis 5,
**dadurch gekennzeichnet, dass** die Beladungsdichte des Filterbehälters (2) mit Energieträger-Filtermaterial (13) zwischen 20 Vol.% und 95 Vol.%, besonders bevorzugt zwischen 30 Vol.% und 70 Vol.%, liegt.

7. Verfahren nach einem der Ansprüche 1 bis 6,
**dadurch gekennzeichnet, dass** die Ausgangstemperatur des mit dem Gegenstromvergaser gewonnenen Gases am Übergang zwischen dem Gegenstromvergaser und dem Filterbehälter (2) zwischen 120 °C und 200 °C beträgt.

## Claims

1. A method for purifying and obtaining energy-containing gases, wherein the energy-containing gas is passed through a filter container (2) equipped with an energy-carrier filter material (13), wherein the filter container (2), in its upper region, comprises a material lock (4) via which the filter container (2) is supplied with the energy-carrier filter material (13), and a gas outlet stub (9), via which the purified gas is discharged, as well as a material outlet opening (17) at its bottom, so that a gravity-induced material flow from the material lock (4) to the material outlet opening (17) takes place, wherein the energy-carrier filter material (13) is fed via the material outlet opening (17) to a countercurrent gasifier which is operatively connected to the filter container (2), wherein the filter container (2) is combined directly with the countercurrent gasifier via the material outlet opening (17),
wherein during the method an agitator (7) for homogenizing the energy-carrier filter material (13) is used,
**characterized in that** the energy-carrier filter material serves as adsorption material on which tars and moisture condense.

2. The method according to claim 1, **characterized in that**
as energy-carrier filter material (13), a material is selected from the group consisting of biomass of all kinds, lignite, hard coal, plastics, waste wood, wood chips, wood pellets, clear sludge granulate, ramie, straw, paper, tires and waste.

3. The method according to any one of claims 1 to 2,
**characterized in that** a partition plate (14) is arranged between the material lock (4) and the gas outlet stub (9).

4. The method according to any one of claims 1 to 3,
**characterized in that** the filter container (2) comprises a cross-flow dehumidifying device in its central portion, wherein the cross-flow dehumidifying device comprises a dry gas inlet stub (33), a condensate drain valve (34) and a condenser (26), and wherein in particular a heat exchanger is arranged downstream of the condenser for returning energy into the gasifier.

5. The method according to any one of claims 1 to 4, **characterized in that** the filter container (2) has a vertically arranged cylinder with a height to diameter ratio between 20:1 and 0,5:1.

6. The method according to any of claims 1 to 5,
**characterized in that** the loading density of the filter container (2) with energy-carrier filter material (13) is between 20 vol % and 95 vol %, particularly preferred between 30 vol % and 70 vol %.

7. The method according to any one of claims 1 to 6,
**characterized in that** the initial temperature of the gas obtained with the countercurrent gasifier is between 120 °C and 200 °C at the transition between the counterflow gasifier and the filter tank (2).

## Revendications

1. Procédé servant à nettoyer et à extraire des gaz énergétiques, le gaz énergétique passant à travers un récipient filtrant (2) équipé d'un matériau filtrant de support d'énergie (13), le récipient filtrant (2) comprenant dans sa zone supérieure un sas de matériau (4) par lequel le récipient filtrant (2) est chargé avec le matériau filtrant de support d'énergie (13), et une tubulure de sortie de gaz (9), par laquelle le gaz nettoyé est évacué, et au niveau de son fond, une ouverture de sortie de matériau (17), de sorte qu'un écoulement de matériau lié à la force de gravité est possible depuis le sas de matériau (4) en direction de l'ouverture de sortie de matériau (17), le matériau filtrant de support d'énergie (13) étant amené par l'intermédiaire de l'ouverture de sortie de matériau (17) à un gazéificateur à contre-courant qui se trouve en liaison fonctionnelle avec le récipient filtrant (2), le récipient filtrant (2) étant combiné directement au gazéificateur à contre-courant par l'intermédiaire de l'ouverture de sortie de matériau (17),
dans lequel pendant le procédé, un agitateur (7) est utilisé pour homogénéiser le matériau filtrant de support d'énergie (13), **caractérisé en ce que** le matériau filtrant de support d'énergie sert de matériau d'adsorption, sur lequel les goudrons et l'humidité se condensent.

2. Procédé selon la revendication 1, **caractérisé en ce que**
un matériau choisi dans le groupe constitué de tous les types de biomasse, du lignite, de la houille, du plastique, de vieux bois, de copeaux de bois, de granulés de bois, de granulés de boue claire, d'herbe chinoise, de paille, de papier, de pneus et de déchets, est utilisé comme matériau filtrant de support d'énergie (13).

3. Procédé selon l'une quelconque des revendications 1 et 2,
**caractérisé en ce qu'**une plaque de séparation (14) est disposée entre le sas de matériau (4) et la tubulure de sortie de gaz (9).

4. Procédé selon l'une quelconque des revendications 1 à 3,
**caractérisé en ce que** le récipient filtrant (2) comprend un déshumidificateur à courant transversal dans sa section centrale, le déshumidificateur à courant transversal comprenant une tubulure d'entrée de gaz sec (33), une soupape de vidange de condensat (34) et un condenseur (26), et en particulier un échangeur de chaleur étant disposé en aval du condenseur pour la recirculation de l'énergie dans le gazéificateur.

5. Procédé selon l'une quelconque des revendications 1 à 4,
**caractérisé en ce que** le récipient filtrant (2) est un cylindre disposé verticalement ayant un rapport hauteur sur diamètre compris entre 20:1 et 0,5: 1.

6. Procédé selon l'une quelconque des revendications 1 à 5,
**caractérisé en ce que** la densité de chargement du récipient filtrant (2) avec un matériau filtrant de support d'énergie (13) est comprise entre 20 % en volume et 95 % en volume, de manière particulièrement préférée entre 30 % en volume et 70 % en volume.

7. Procédé selon l'une quelconque des revendications 1 à 6,
**caractérisé en ce que** la température de départ du gaz obtenu avec le gazéificateur à contre-courant à la transition entre le gazéificateur à contre-courant et le récipient filtrant (2) est comprise entre 120 °C et 200 °C.
